# EUROPEAN PATENT SPECIFICATION

(11) **EP 3 990 546 B1**
(45) Date of publication and mention of the grant of the patent: **03.09.2025**
(21) Application number: 20743337.6
(22) Date of filing: 26.06.2020
(51) Int. Cl.: C08L 69/00, C08K 5/49, C08K 5/521, C08K 5/526

(54) **TRANSPARENT ULTRA-LOW HALOGEN FLAME RETARDANT POLYCARBONATE COMPOSITIONS WITH V0 AT 0.6 MM**
TRANSPARENTE POLYCARBONAT-ZUSAMMENSETZUNGEN MIT ULTRANIEDRIGEM HALOGENFLAMMSCHUTZ MIT V0 BEI 0,6 MM
COMPOSITIONS DE POLYCARBONATE IGNIFUGES TRANSPARENTES À TRÈS FAIBLE TENEUR EN HALOGÈNE AVEC V0 À 0,6 MM

(30) Priority: 28.06.2019 EP 19183245
(43) Date of publication of application: 04.05.2022
(73) Proprietor: SHPP Global Technologies B.V., 4612 PX Bergen op Zoom (NL)
(72) Inventor: FARRELL, Tony, 4612 PX Bergen OP Zoom (NL)
(74) Representative: Balder IP Law, S.L.
(86) International application number: PCT/IB2020/056088
(87) International publication number: WO 2020/261222

(56) References cited:
- EP-A1- 2 634 219
- JP-A- H09 183 893
- US-B1- 6 204 313

## Description

### BACKGROUND

This disclosure relates to flame retardant polycarbonate compositions, and in particular transparent, ultra-low halogen, flame retardant polycarbonate compositions, methods of manufacture, and uses thereof.

Polycarbonates are useful in the manufacture of articles and components for a wide range of applications, from automotive parts to electronic appliances. Because of their broad use, particularly in thin-walled applications, it is desirable to provide polycarbonate compositions with a UL-94 V0 flame retardant performance at thicknesses of 0.6 mm or less. It has been difficult, however, to achieve this level of flame retardance in compositions that are transparent, and that also maintain desirable flow and heat resistance. It would further be desirable for such compositions to have an ultra-low halogen content. For example, in publication JP H09 183893A a flame retardant composition comprising a poly(carbonate-bisphenol phthalate ester, an organophosphorous compound, and necessarily an anti-drip agent is disclosed.

There accordingly remains a need in the art for transparent flame retardant compositions that have an ultra-low halogen content.

### BRIEF DESCRIPTION

The above-described and other deficiencies of the art are met by a flame retardant composition comprising: a poly(carbonate-bisphenol phthalate ester) comprising 1-50 wt% of aromatic carbonate units and 50-99 wt% of bisphenol phthalate ester units, each based on the sum of the moles of the carbonate units and the bisphenol phthalate ester units; an organophosphorous compound wherein the organophosphorous compound is present in an amount effective to provide 0.5-0.9 wt% of added phosphorous, based on the total weight of the composition, and wherein the organophosphorous compound has a mass loss maximum below 420 °C as determined by thermogravimetric analysis using an air atmosphere and a rate of temperature change of 20°C per minute; and a poly(carbonate-monoarylate phthalate ester) comprising 2-90 mole % of aromatic carbonate units and 10-98 mole % of monoarylate phthalate ester units, each based on the sum of the moles of the carbonate units and the monoarylate phthalate ester units, wherein the composition has a bromine or chlorine content of less than or equal to 100 parts per million by weight, less than or equal to 75 parts per million by weight, or less than or equal to 50 parts per million by weight, based on the total parts by weight of the composition; and wherein a molded sample of the flame retardant composition has a UL 94 rating of V0 at a thickness of 0.6 millimeter, and a transmission of at least 70% according to ASTM D 1003 at a thickness of 1.0 millimeter.

In another aspect, a method of manufacture comprises combining the above-described components to form a flame retardant composition.

In yet another aspect, an article comprises the above-described flame retardant composition.

In still another aspect, a method of manufacture of an article comprises molding, extruding, or shaping the above-described flame retardant composition into an article.

The above described and other features are exemplified by the following drawings, detailed description, examples, and claims.

### BRIEF DESCRIPTION OF THE DRAWINGS

The following figures are exemplary aspects wherein the like elements are numbered alike.

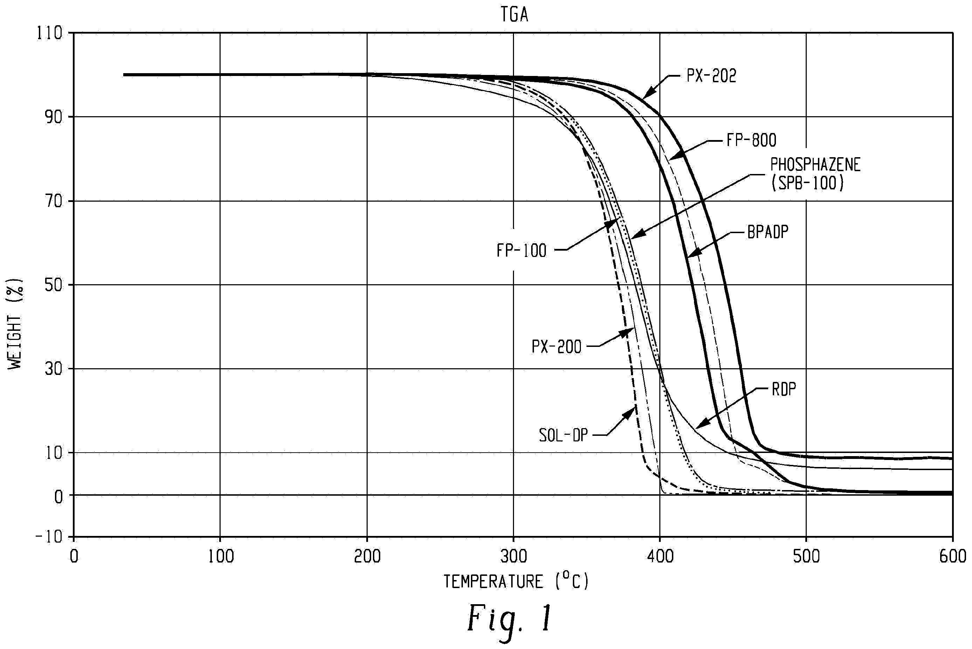

FIG. 1 shows the mass loss rate as a function of temperature for different flame retardant additives, wherein RDP is resorcinol tetraphenyl diphosphate, BPADP is bisphenol A bis(diphenyl phosphate), FP-100 is a cyclic phenoxyphosphazene, phosphazene (SPB-100) is a cyclic / polymeric phenoxyphosphazene, PX-200 is 3-phenylene tetrakis-2,6-dimethylphenyl phosphate, PX-202 is resorcinol bis(di-2,6-dimethylphenyl phosphate), and FP-800 is a mixed phosphate ester with [1,1'-biphenyl-4,4'-diol] and phenol.

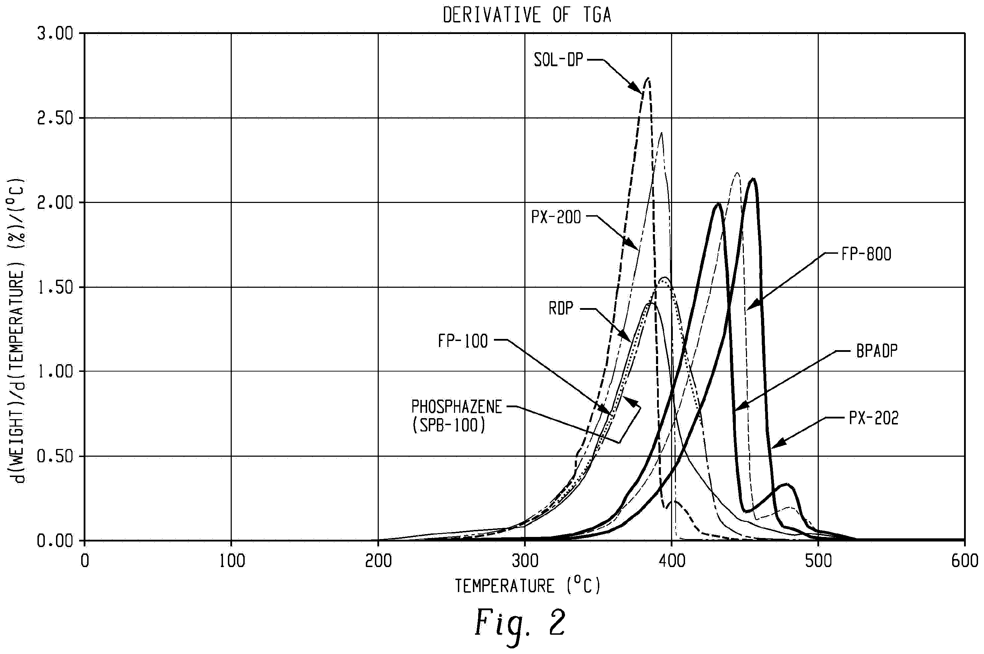

FIG. 2 shows the mass loss rate as a function of temperature for the above-described flame retardants.

### DETAILED DESCRIPTION

Flame retardant compositions are widely used in applications requiring flame retardant (FR) performance. In the more challenging applications, the compositions are optically clear or have a high level of transparency coupled with UL-94 V0 FR performance at wall thicknesses of 0.6 mm or less. Due to a growing concern with environmental issues, there is a need for moldable compositions that that are bromine, chlorine, and fluorine free, also referred to as ultra-low halogen (ULH) content flame retardant compositions.

Phosphorous flame retardants are suitable for thin-walled applications due to the improvement in rheological properties such as melt flow viscosity. Some repeating units of polycarbonates can decompose to form free phenolic and carboxylic acid groups, for example, by Fries-type rearrangements or Kolbe-Schmitt rearrangement. Phosphorous flame retardants can form covalent bonds and crosslink bridges with the free phenolic and carboxylic acid groups of the decomposed polycarbonates to provide flame retardant compositions.

Surprisingly, the inventors hereof discovered that the compositions comprising a poly(carbonate-bisphenol phthalate ester), an organophosphorous compound, and a poly(carbonate-monoarylate phthalate ester) showed improved flame retardancy over known flame retardant compositions. Both condensed and gas phase modes have been suggested for aromatic phosphate flame retardants and it has been demonstrated that the decomposition temperature of the aromatic phosphate (and hence the organophosphorous structure) plays a role in the mechanism and control of the flame retardant performance, particularly in the condensed phase interactions.

The flame retardant composition comprises a poly(carbonate-bisphenol phthalate ester) and a poly(carbonate-monoarylate phthalate ester), each including aromatic carbonate units of formula (1) and aromatic ester units of formula (2). 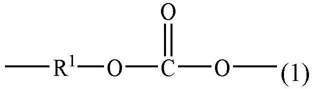 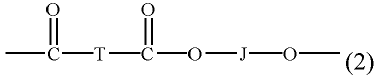 Each of these is described in further detail below.

In the aromatic carbonate units of formula (1), at least 60%, and preferably each R¹ is a C₆₋₃₀ aromatic group, that is, contains at least one aromatic moiety. R¹ can be derived from an aromatic dihydroxy compound of the formula HO-R¹-OH, in particular of formula (3)

HO-A¹-Y¹-A²-OH (3)

wherein each of A¹ and A² is a monocyclic divalent aromatic group and Y¹ is a single bond or a bridging group having one or more atoms that separate A¹ from A². In an aspect, one atom separates A¹ from A². Specifically, each R¹ can be derived from a bisphenol of formula (4) 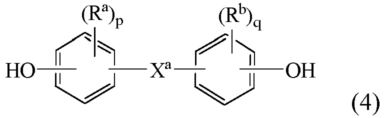 wherein R^{a} and R^{b} are each independently a halogen, C₁₋₁₂ alkoxy, or C₁₋₁₂ alkyl, and p and q are each independently integers of 0-4. It will be understood that when p or q is less than 4, the valence of each carbon of the ring is filled by hydrogen. Also in formula (4), X^{a} is a bridging group connecting the two hydroxy-substituted aromatic groups, where the bridging group and the hydroxy substituent of each C₆ arylene group are disposed ortho, meta, or para (preferably para) to each other on the C₆ arylene group. In an aspect, the bridging group X^{a} is single bond, - O-, -S-, -S(O)-, -S(O)₂-, -C(O)-, or a C₁₋₁₈ organic group. The C₁₋₁₈ organic bridging group can be cyclic or acyclic, aromatic or non-aromatic, and can further comprise heteroatoms such as halogens, oxygen, nitrogen, sulfur, silicon, or phosphorous. The C₁₋₁₈ organic group can be disposed such that the C₆ arylene groups connected thereto are each connected to a common alkylidene carbon or to different carbons of the C₁₋₁₈ organic bridging group. In an aspect, p and q is each 1, and R^{a} and R^{b} are each a C₁₋₃ alkyl group, preferably methyl, disposed meta to the hydroxy group on each arylene group.

In an aspect, X^{a} is a C₃₋₁₈ cycloalkylidene, a C₁₋₂₅ alkylidene of formula - C(R^{c})(R^{d}) - wherein R^{c} and R^{d} are each independently hydrogen, C₁₋₁₂ alkyl, C₁₋₁₂ cycloalkyl, C₇₋₁₂ arylalkyl, C₁₋₁₂ heteroalkyl, or cyclic C₇₋₁₂ heteroarylalkyl, or a group of the formula - C(=R^{e})- wherein R^{e} is a divalent C₁₋₁₂ hydrocarbon group. Groups of these types include methylene, cyclohexylmethylidene, ethylidene, neopentylidene, and isopropylidene, as well as 2-[2.2.1]-bicycloheptylidene, cyclohexylidene, 3,3-dimethyl-5-methylcyclohexylidene, cyclopentylidene, cyclododecylidene, and adamantylidene.

In another aspect, X^{a} is a C₁₋₁₈ alkylene, a C₃₋₁₈ cycloalkylene, a fused C₆₋₁₈ cycloalkylene, or a group of the formula -J¹-G-J²- wherein J¹ and J² are the same or different C₁₋₆ alkylene and G is a C₃₋₁₂ cycloalkylidene or a C₆₋₁₆ arylene.

For example, X^{a} can be a substituted C₃₋₁₈ cycloalkylidene of formula (5) 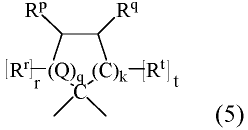 wherein R^{f}, R^{p}, R^{d}, and R^{t} are each independently hydrogen, halogen, oxygen, or C₁₋₁₂ hydrocarbon groups; Q is a direct bond, a carbon, or a divalent oxygen, sulfur, or -N(Z)- where Z is hydrogen, halogen, hydroxy, C₁₋₁₂ alkyl, C₁₋₁₂ alkoxy, C₆₋₁₂ aryl, or C₁₋₁₂ acyl; r is 0-2, t is 1 or 2, q is 0 or 1, and k is 0-3, with the proviso that at least two of R^{r}, R^{p}, R^{q}, and R^{t} taken together are a fused cycloaliphatic, aromatic, or heteroaromatic ring. It will be understood that where the fused ring is aromatic, the ring as shown in formula (5) will have an unsaturated carbon-carbon linkage where the ring is fused. When k is one and q is 0, the ring as shown in formula (5) contains 4 carbon atoms, when k is 2, the ring as shown in formula (5) contains 5 carbon atoms, and when k is 3, the ring contains 6 carbon atoms. In an aspect, two adjacent groups (e.g., R^{q} and R^{t} taken together) form an aromatic group, and in another aspect, R^{q} and R^{t}

taken together form one aromatic group and R^{f} and R^{p} taken together form a second aromatic group. When R^{q} and R^{t} taken together form an aromatic group, R^{p} can be a double-bonded oxygen atom, i.e., a ketone, or Q can be -N(Z)- wherein Z is phenyl.

Bisphenols wherein X^{a} is a cycloalkylidene of formula (5) can be used in the manufacture of polycarbonates containing phthalimidine carbonate units of formula (1a) 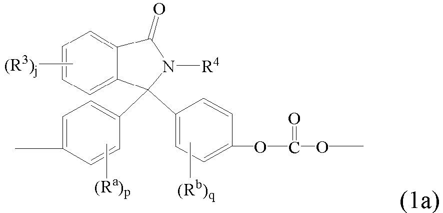 wherein R^{a}, R^{b}, p, and q are as in formula (4), R³ is each independently a C₁₋₆ alkyl, j is 0-4, and R₄ is hydrogen, C₁₋₆ alkyl, or a substituted or unsubstituted phenyl, for example a phenyl substituted with up to five C₁₋₆ alkyls. For example, the phthalimidine carbonate units are of formula (1b) 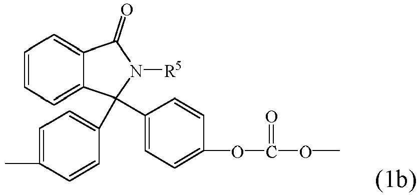 wherein R⁵ is hydrogen, phenyl optionally substituted with up to five 5 C₁₋₆ alkyls, or C₁₋₄ alkyl. In an aspect in formula (1b), R⁵ is hydrogen, methyl, or phenyl, preferably phenyl. Carbonate units (1b) wherein R⁵ is phenyl can be derived from 2-phenyl-3,3'-bis(4-hydroxy phenyl)phthalimidine (also known as 3,3-bis(4-hydroxyphenyl)-2-phenylisoindolin-1-one, or N-phenyl phenolphthalein bisphenol ("PPPBP")).

Other bisphenol carbonate repeating units of this type are the isatin carbonate units of formula (1c) and (1d) 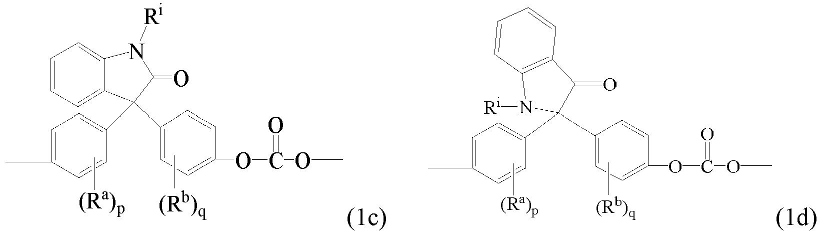 wherein R^{a} and R^{b} are each independently a halogen, C₁₋₁₂ alkoxy, or C₁₋₁₂ alkyl, p and q are each independently 0-4, and Rⁱ is C₁₋₁₂ alkyl, phenyl optionally substituted with 1-5 C₁₋₁₀ alkyl, or benzyl optionally substituted with 1-5 C₁₋₁₀ alkyl. In an aspect, R^{a} and R^{b} are each methyl, p and q are each independently 0 or 1, and R¹ is C₁₋₄ alkyl or phenyl.

Other examples of bisphenol carbonate units derived from of bisphenols (3) wherein X^{a} is a substituted or unsubstituted C₃₋₁₈ cycloalkylidene include the cyclohexylidene-bridged bisphenol of formula (1e) 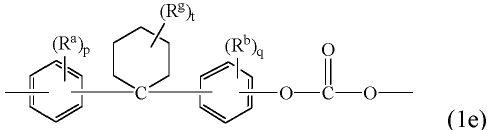 wherein R^{a} and R^{b} are each independently C₁₋₁₂ alkyl, R^{g} is C₁₋₁₂ alkyl, p and q are each independently 0-4, and t is 0-10. In a specific aspect, at least one of each of R^{a} and R^{b} are disposed meta to the cyclohexylidene bridging group. In an aspect, R^{a} and R^{b} are each independently C₁₋₄ alkyl, R^{g} is C₁₋₄ alkyl, p and q are each 0 or 1, and t is 0-5. In another specific aspect, R^{a}, R^{b}, and R^{g} are each methyl, p and q are each 0 or 1, and t is 0 or 3, preferably 0. In still another aspect, p and q are each 0, each R^{g} is methyl, and t is 3, such that X^{a} is 3,3-dimethyl-5-methyl cyclohexylidene.

Examples of other bisphenol carbonate units derived from bisphenol (4) wherein X^{a} is a substituted or unsubstituted C₃₋₁₈ cycloalkylidene include adamantyl units of formula (1f) and fluorenyl units of formula (1g) 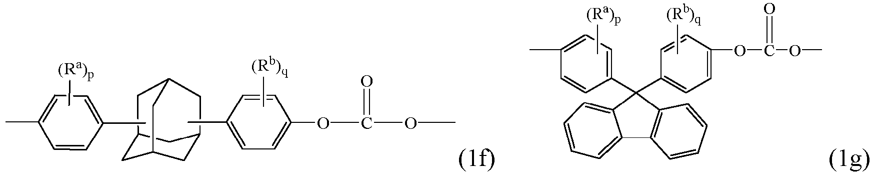 wherein R^{a} and R^{b} are each independently C₁₋₁₂ alkyl, and p and q are each independently 1-4. In a specific aspect, at least one of each of R^{a} and R^{b} are disposed meta to the cycloalkylidene bridging group. In an aspect, R^{a} and R^{b} are each independently C₁₋₃ alkyl, and p and q are each 0 or 1; preferably, R^{a}, R^{b} are each methyl, p and q are each 0 or 1, and when p and q are 1, the methyl group is disposed meta to the cycloalkylidene bridging group. Carbonates containing units (1a) to (1g) are useful for making polycarbonates with high glass transition temperatures (Tg) and high heat distortion temperatures.

Other useful dihydroxy compounds of the formula HO-R¹-OH include aromatic dihydroxy compounds of formula (6) 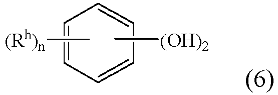 wherein each R^{h} is independently a halogen atom, an unsubstituted or substituted C₁₋₁₀ hydrocarbyl group such as a C₁₋₁₀ alkyl, a halogen-substituted C₁₋₁₀ alkyl, a C₆₋₁₀ aryl, or a halogen-substituted C₆₋₁₀ aryl, and n is 0-4. The halogen is usually bromine.

Some illustrative examples of specific dihydroxy compounds include the following: 4,4'-dihydroxybiphenyl, 1,6-dihydroxynaphthalene, 2,6-dihydroxynaphthalene, bis(4-hydroxyphenyl)methane, bis(4-hydroxyphenyl)diphenylmethane, bis(4-hydroxyphenyl)-1-naphthylmethane, 1,2-bis(4-hydroxyphenyl)ethane, 1,1-bis(4-hydroxyphenyl)-1-phenylethane, 2-(4-hydroxyphenyl)-2-(3-hydroxyphenyl)propane, bis(4-hydroxyphenyl)phenylmethane, 2,2-bis(4-hydroxy-3-bromophenyl)propane, 1,1-bis (hydroxyphenyl)cyclopentane, 1,1-bis(4-hydroxyphenyl)cyclohexane, 1,1-bis(4-hydroxyphenyl)isobutene, 1,1-bis(4-hydroxyphenyl)cyclododecane, trans-2,3-bis(4-hydroxyphenyl)-2-butene, 2,2-bis(4-hydroxyphenyl)adamantane, alpha, alpha'-bis(4-hydroxyphenyl)toluene, bis(4-hydroxyphenyl)acetonitrile, 2,2-bis(3-methyl-4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis(3-sec-butyl-4-hydroxyphenyl)propane, 2,2-bis(3-t-butyl-4-hydroxyphenyl)propane, 2,2-bis(3-cyclohexyl-4-hydroxyphenyl)propane, 2,2-bis(3-allyl-4-hydroxyphenyl)propane, 2,2-bis(3-methoxy-4-hydroxyphenyl)propane, 2,2-bis(4-hydroxyphenyl)hexafluoropropane, 1,1-dichloro-2,2-bis(4-hydroxyphenyl)ethylene, 1,1-dibromo-2,2-bis(4-hydroxyphenyl)ethylene, 1,1-dichloro-2,2-bis(5-phenoxy-4-hydroxyphenyl)ethylene, 4,4'-dihydroxybenzophenone, 3,3-bis(4-hydroxyphenyl)-2-butanone, 1,6-bis(4-hydroxyphenyl)-1,6-hexanedione, ethylene glycol bis(4-hydroxyphenyl)ether, bis(4-hydroxyphenyl)ether, bis(4-hydroxyphenyl)sulfide, bis(4-hydroxyphenyl)sulfoxide, bis(4-hydroxyphenyl)sulfone, 9,9-bis(4-hydroxyphenyl)fluorine, 2,7-dihydroxypyrene, 6,6'-dihydroxy-3,3,3',3'- tetramethylspiro(bis)indane ("spirobiindane bisphenol"), 3,3-bis(4-hydroxyphenyl)phthalimide, 2,6-dihydroxydibenzo-p-dioxin, 2,6-dihydroxythianthrene, 2,7-dihydroxyphenoxathin, 2,7-dihydroxy-9,10-dimethylphenazine, 3,6-dihydroxydibenzofuran, 3,6-dihydroxydibenzothiophene, and 2,7-dihydroxycarbazole, resorcinol, substituted resorcinol compounds such as 5-methyl resorcinol, 5-ethyl resorcinol, 5-propyl resorcinol, 5-butyl resorcinol, 5-t-butyl resorcinol, 5-phenyl resorcinol, 5-cumyl resorcinol, 2,4,5,6-tetrafluoro resorcinol, 2,4,5,6-tetrabromo resorcinol, or the like; catechol; hydroquinone; substituted hydroquinones such as 2-methyl hydroquinone, 2-ethyl hydroquinone, 2-propyl hydroquinone, 2-butyl hydroquinone, 2-t-butyl hydroquinone, 2-phenyl hydroquinone, 2-cumyl hydroquinone, 2,3,5,6-tetramethyl hydroquinone, 2,3,5,6-tetra-t-butyl hydroquinone, 2,3,5,6-tetrafluoro hydroquinone, 2,3,5,6-tetrabromo hydroquinone, or the like, or combinations comprising at least one of the foregoing dihydroxy compounds.

Specific examples of bisphenol compounds of formula (4) include 1,1-bis(4-hydroxyphenyl) methane, 1,1-bis(4-hydroxyphenyl) ethane, 2,2-bis(4-hydroxyphenyl) propane (hereinafter "bisphenol A" or "BPA"), 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-2-methylphenyl) propane, 1,1-bis(4-hydroxy-t-butylphenyl) propane, 3,3-bis(4-hydroxyphenyl) phthalimidine, 2-phenyl-3,3-bis(4-hydroxyphenyl) phthalimidine (PPPBP), and 1,1-bis(4-hydroxy-3-methylphenyl)cyclohexane (DMBPC). Combinations o-dihydroxy compounds can also be used. In a specific aspect, the aromatic carbonate repeating units are derived from bisphenol A, in which each of A¹ and A² is p-phenylene and Y¹ is isopropylidene in formula (4).

Poly(carbonate-bisphenol phthalate ester)s and poly(carbonate-monoarylate phthalate ester)s further contain, in addition to recurring carbonate units of formula (1), repeating units of formula (2) wherein J is a divalent group derived from a dihydroxy compound (including a reactive derivative thereof), and can be, for example, a C₁₋₁₀ alkylene, a C₆₋₂₀ cycloalkylene, a C₅₋₂₀ arylene, or a polyoxyalkylene in which the alkylene groups contain 2-6 carbon atoms, preferably 2, 3, or 4 carbon atoms; and T is a divalent group derived from a dicarboxylic acid (including a reactive derivative thereof), and can be, for example, a C₂₋₂₀ alkylene, a C₅₋₂₀ cycloalkylene, or a C₆₋₂₀ arylene. Copolyesters containing a combination of different T or J groups can be used. The polyester units can be branched or linear.

In an aspect, J is a C₂₋₃₀ alkylene group having a straight chain, branched chain, or cyclic (including polycyclic) structure, for example ethylene, n-propylene, i-proplyene, 1,4-butylene, 1,4-cyclohexylene, or 1,4-methylenecyclohexane. In another aspect, J is derived from a bisphenol of formula (4), e.g., bisphenol A. In another aspect, J is derived from an aromatic dihydroxy compound of formula (6), e.g, resorcinol.

The monoarylate phthalate ester units are derived from dicarboxylic acid monomers and aromatic dihydroxy monomers, i.e., monoaryl dihydroxy monomers, such as resorcinol. Aromatic dicarboxylic acid monomers that can be used to prepare the polyester units include isophthalic or terephthalic acid, 1,2-di(p-carboxyphenyl)ethane, 4,4'-dicarboxydiphenyl ether, 4,4'-bisbenzoic acid, or a combination thereof. Acids containing fused rings can also be present, such as in 1,4-, 1,5-, or 2,6-naphthalenedicarboxylic acids. Specific dicarboxylic acids include terephthalic acid, isophthalic acid, naphthalene dicarboxylic acid, 1,4-cyclohexane dicarboxylic acid, or a combination thereof. A specific dicarboxylic acid comprises a combination of isophthalic acid and terephthalic acid wherein the weight ratio of isophthalic acid to terephthalic acid is 91:9-2:98.

Specific ester units include ethylene terephthalate, n-propylene terephthalate, n-butylene terephthalate, 1,4-cyclohexanedimethylene terephthalate, and ester units derived from isophthalic acid, terephthalic acid, and resorcinol (ITR). The molar ratio of ester units to carbonate units in the copolymers can vary broadly, for example from 1:99-99: 1, preferably from 10:90-90: 10, or from 25:75-75:25, or from 2:98-15:85, depending on the desired properties of the final composition.

In a specific aspect, the poly(carbonate-bisphenol phthalate ester) is a poly(bisphenol A carbonate)-co-(bisphenol A-phthalate-ester) of formula (7a) 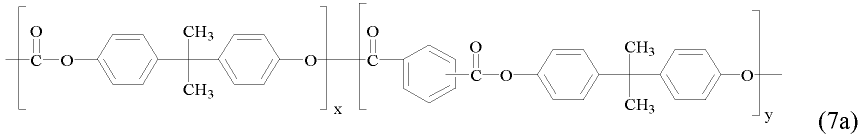 wherein y and x represent the wt% of bisphenol phthalate ester units and bisphenol A carbonate units, respectively. Generally, the units are present as blocks. In an aspect, the wt% of ester units y to carbonate units x in the copolymers is 50:50-99:1, or 55:45-90:10, or 75:25-95:5. Copolymers of formula (7a) comprising 35-45 wt% of carbonate units and 55-65 wt% of ester units, wherein the ester units have a molar ratio of isophthalate to terephthalate of 45:55-55:45 are often referred to as poly(carbonate-ester)s (PCE). Copolymers comprising 15-25 wt% of carbonate units and 75-85 wt% of ester units having a molar ratio of isophthalate to terephthalate from 98:2-88:12 are often referred to as poly(phthalate-carbonate)s (PPC). In a specific aspect, the aromatic carbonate units of poly(carbonate-monoarylate phthalate ester) are bisphenol A carbonate units.

In another aspect, the poly(carbonate-monoarylate phthalate ester)s include carbonate units (1) and repeating monoarylate phthalate units of formula (7b) 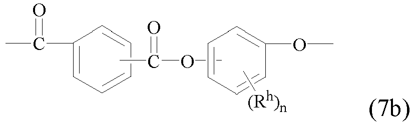 wherein each R^{h} is independently a halogen atom, a C₁₋₁₀ hydrocarbyl such as a C₁₋₁₀ alkyl group, a halogen-substituted C₁₋₁₀ alkyl group, a C₆₋₁₀ aryl group, or a halogen-substituted C₆₋₁₀ aryl group, and n is 0 to 4. Preferably, each R^{h} is independently a C₁₋₄ alkyl, and n is 0 to 3, 0 to 1, or 0. These poly(carbonate-monoarylate phthalate ester)s include units of formula (7c) 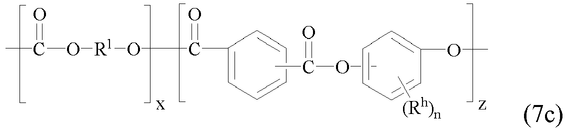 wherein R¹ is as defined in formula (1) and R^{h} and n are as defined in formula (7c), and the mole ratio of carbonate units x to ester units z is from 99:1-1:99, or from 98:2-2:98, or from 90:10-10:90. In an aspect the mole ratio of x:z is from 50:50-99:1, or from 1:99-50:50.

Preferably, the monoarylate phthalate ester unit (7c) is derived from the reaction of a combination of isophthalic and terephthalic diacids (or a reactive derivative thereof) with resorcinol (or a reactive derivative thereof) to provide isophthalate/terephthalate-resorcinol ("ITR" ester units) of formula (7c-1).

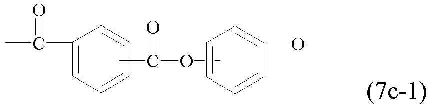

In an aspect, the ITR ester units are present in the polycarbonate copolymer in an amount greater than or equal to 95 mol%, preferably greater than or equal to 99 mol%, and still more preferably greater than or equal to 99.5 mol%, based on the total moles of ester units in the copolymer. Such (isophthalate/terephthalate-resorcinol)-carbonate copolymers ("ITR-PC") can possess many desired features, including toughness, transparency, and weatherability. ITR-PC copolymers can also have desirable thermal flow properties. In addition, ITR-PC copolymers can be readily manufactured on a commercial scale using interfacial polymerization techniques, which allow synthetic flexibility and composition specificity in the synthesis of the ITR-PC copolymers.

A specific example of a poly(carbonate-monoarylate phthalate ester) is a poly(bisphenol A carbonate-co-isophthalate-terephthalate-resorcinol ester) of formula (7d) 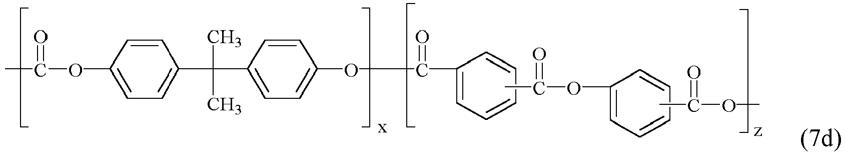 wherein the mole ratio of x:z is or from 98:2-2:98, or from 90:10-10:90. In an aspect the mole ratio of x:z is from 50:50-99:1, or from 1:99-50:50. The ITR ester units can be present in the poly(bisphenol A carbonate-co-isophthalate-terephthalate-resorcinol ester) in an amount greater than or equal to 95 mol%, preferably greater than or equal to 99 mol%, and still more preferably greater than or equal to 99.5 mol%, based on the total moles of ester units in the copolymer. Other carbonate units, other ester units, or a combination thereof can be present, in a total amount of 1-20 mol%, based on the total moles of units in the copolymers, for example resorcinol carbonate units of formula (20) and bisphenol ester units of formula (7e): 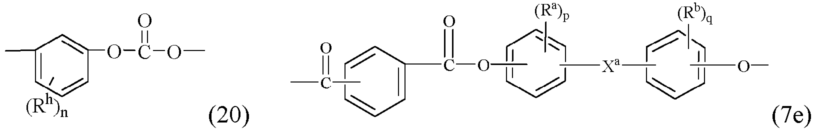 wherein, in the foregoing formulae, R^{h} is each independently a C₁₋₁₀ hydrocarbon group, n is 0 to 4, R^{a} and R^{b} are each independently a C₁₋₁₂ alkyl, p and q are each independently integers of 0 to 4, and X^{a} is a single bond, -O-, -S-, -S(O)-, -S(O)₂-, -C(O)-, or a C₁₋₁₃ alkylidene of formula - C(R^{c})(R^{d}) - wherein R^{c} and R^{d} are each independently hydrogen or C₁₋₁₂ alkyl, or a group of the formula -C(=R^{e})- wherein R^{e} is a divalent C₁₋₁₂ hydrocarbon group. The bisphenol ester units can be bisphenol A phthalate ester units of the formula 7e-1

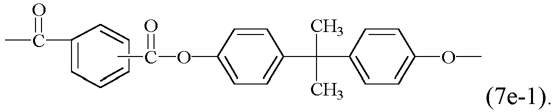

In an aspect, poly(bisphenol A carbonate-co-isophthalate-terephthalate-resorcinol ester) (7d) comprises 1-90 mol% of bisphenol A carbonate units, 10-99 mol% of isophthalic acid-terephthalic acid-resorcinol ester units, and optionally 1-60 mol% of resorcinol carbonate units, isophthalic acid-terephthalic acid-bisphenol A phthalate ester units, or a combination thereof. In another aspect, poly(bisphenol A carbonate-co-isophthalate-terephthalate-resorcinol ester) (7d) comprises 10-20 mol% of bisphenol A carbonate units, 20-98 mol% of isophthalic acid-terephthalic acid-resorcinol ester units, and optionally 1-60 mol% of resorcinol carbonate units, isophthalic acid-terephthalic acid-bisphenol A phthalate ester units, or a combination thereof.

The flame retardant composition includes a mixture of a poly(carbonate-bisphenol phthalate ester) and a poly(carbonate-monoarylate phthalate ester). In some aspects, the composition includes 25-60 wt% of the poly(carbonate-bisphenol phthalate ester); and 40-75 wt% a poly(carbonate-monoarylate phthalate ester).

The polycarbonate copolymers comprising arylate ester units are generally prepared from polyester blocks. The polyester blocks can also be prepared by interfacial polymerization. Rather than utilizing the dicarboxylic acid or diol per se, the reactive derivatives of the acid or diol, such as the corresponding acid halides, in particular the acid dichlorides and the acid dibromides can be used. Thus, for example instead of using isophthalic acid, terephthalic acid, or a combination thereof, isophthaloyl dichloride, terephthaloyl dichloride, or a combination thereof can be used. The polyesters can also be obtained by melt-process condensation as described above, by solution phase condensation, or by transesterification polymerization wherein, for example, a dialkyl ester such as dimethyl terephthalate can be transesterified with the dihydroxy reactant using acid catalysis, to generate the polyester blocks. Branched polyester blocks, in which a branching agent, for example, a glycol having three or more hydroxyl groups or a trifunctional or multifunctional carboxylic acid has been incorporated, can be used. Furthermore, it can be desirable to have various concentrations of acid and hydroxyl end groups on the polyester blocks, depending on the ultimate end use of the composition.

The polycarbonate copolymers comprising arylate ester units can have an M_{w} of 2,000-100,000 g/mol, preferably 3,000-75,000 g/mol, more preferably 4,000-50,000 g/mol, more preferably 5,000-35,000 g/mol, and still more preferably 17,000-30,000 g/mol. Molecular weight determinations are performed using GPC using a cross linked styrene-divinyl benzene column, at a sample concentration of 1 milligram per milliliter, and as calibrated with bisphenol A polycarbonate standards. Samples are eluted at a flow rate of 1.0 ml/min with methylene chloride as the eluent.

The flame retardant composition includes a mixture of a poly(carbonate-bisphenol phthalate ester) and a poly(carbonate-monoarylate phthalate ester). The aromatic carbonate units can comprise 10-70 mol%, preferably 10-50 mol%, more preferably 10-30 mol% of the poly(carbonate-monoarylate phthalate ester). The monoarylate phthalate ester units can comprise 30-90 mol%, preferably 50-90 mol%, more preferably 70-90 mol% of the poly(carbonate-monoarylate phthalate ester).

An end-capping agent (also referred to as a chain stopper agent or chain terminating agent) can be included during polymerization to provide end groups. The end-capping agent (and thus end groups) are selected based on the desired properties of the polycarbonates. Exemplary end-capping agents are exemplified by monocyclic phenols such as phenol and C₁₋₂₂ alkyl-substituted phenols such as p-cumyl-phenol, resorcinol monobenzoate, and p-and tertiary-butyl phenol, monoethers of diphenols, such as p-methoxyphenol, and alkyl-substituted phenols with branched chain alkyl substituents having 8 to 9 carbon atoms, 4-substituted-2-hydroxybenzophenones and their derivatives, aryl salicylates, monoesters of diphenols such as resorcinol monobenzoate, 2-(2-hydroxyaryl)-benzotriazoles and their derivatives, 2-(2-hydroxyaryl)-1,3,5-triazines and their derivatives, mono-carboxylic acid chlorides such as benzoyl chloride, C₁₋₂₂ alkyl-substituted benzoyl chloride, toluoyl chloride, bromobenzoyl chloride, cinnamoyl chloride, and 4-nadimidobenzoyl chloride, polycyclic, mono-carboxylic acid chlorides such as trimellitic anhydride chloride, and naphthoyl chloride, functionalized chlorides of aliphatic monocarboxylic acids, such as acryloyl chloride and methacryoyl chloride, and mono-chloroformates such as phenyl chloroformate, alkyl-substituted phenyl chloroformates, p-cumyl phenyl chloroformate, and toluene chloroformate. Combinations of different end groups can be used.

Poly(ester-carbonate)s can be manufactured by processes such as interfacial polymerization and melt polymerization. Although the reaction conditions for interfacial polymerization can vary, an exemplary process generally involves dissolving or dispersing a dihydroxy compound in aqueous NaOH or KOH, adding the resulting mixture to a water-immiscible solvent, and contacting the reactants with a carbonate precursor in the presence of a catalyst such as, for example, a tertiary amine or a phase transfer catalyst, under controlled pH conditions, e.g., 8-10. The water-immiscible solvent can be, for example, methylene chloride, 1,2-dichloroethane, chlorobenzene, toluene, and the like.

Generally, useful flame retardants include organophosphorous compounds that include phosphorous, bromine, chlorine, or fluorine. However, non-brominated, non-chlorinated, and non-fluorinated phosphorous-containing flame retardants are preferred for regulatory reasons. Accordingly, the flame retardant composition can be essentially free of chlorine and bromine. "Essentially free of chlorine and bromine" is defined as having a bromine or chlorine content of less than or equal to 100 parts per million by weight (ppm), less than or equal to 75 ppm, or less than or equal to 50 ppm, based on the total parts by weight of the composition. Preferably, the flame retardant composition has a combined bromine and chlorine content of less than or equal to 100 ppm, less than or equal to 75 ppm, or less than or equal to 50 ppm, based on the total parts by weight of the composition. In another aspect, the flame retardant composition can be essentially free of chlorine, bromine, and fluorine. "Essentially free of chlorine, bromine, and fluorine" is defined as having a bromine, chlorine, or fluorine content of less than or equal to 100 ppm, less than or equal to 75 ppm, or less than or equal to 50 ppm, based on the total parts by weight of the composition. Preferably, the flame retardant composition has a combined bromine, chlorine, and fluorine content of less than or equal to 100 ppm, less than or equal to 75 ppm, or less than or equal to 50 ppm, based on the total parts by weight of the composition.

The organophosphorous compound can be monomeric, oligomeric, or polymeric, and can include a phosphate (e.g., P(=O)(OR)₃), phosphite (e.g., P(OR)₃), phosphonate (e.g., RP(=O)(OR)₂), phosphinate (e.g., R₂P(=O)(OR)), phosphine oxide (e.g., R₃P(=O)), or phosphine (e.g., R₃P), wherein each R in the phosphorous-containing groups can be the same or different, provided that at least one R is an aromatic group. A combination of different phosphorous-containing groups can be used. The aromatic group can be directly or indirectly bonded to the phosphorous, or to an oxygen of the phosphorous-containing group (i.e., an ester).

In an aspect the organophosphorous compound is a monomeric phosphate. Representative monomeric aromatic phosphates are of the formula (GO)₃P=O, wherein each G is independently an alkyl, cycloalkyl, aryl, alkylarylene, or arylalkylene group having up to 30 carbon atoms, provided that at least one G is an aromatic group. Two of the G groups can be joined together to provide a cyclic group. In some aspects G corresponds to a monomer used to form the polycarbonate, e.g., resorcinol. Exemplary phosphates include phenyl bis(dodecyl) phosphate, phenyl bis(neopentyl) phosphate, phenyl bis(3,5,5'-trimethylhexyl) phosphate, ethyl diphenyl phosphate, 2-ethylhexyl di(p-tolyl) phosphate, bis(2-ethylhexyl) p-tolyl phosphate, tritolyl phosphate, bis(2-ethylhexyl) phenyl phosphate, tri(nonylphenyl) phosphate, bis(dodecyl) p-tolyl phosphate, dibutyl phenyl phosphate, 2-chloroethyl diphenyl phosphate, p-tolyl bis(2,5,5'-trimethylhexyl) phosphate, 2-ethylhexyl diphenyl phosphate, and the like. A specific aromatic phosphate is one in which each G is aromatic, for example, triphenyl phosphate, tricresyl phosphate, isopropylated triphenyl phosphate, and the like.

Di- or polyfunctional organophosphorous compounds are also useful, for example, compounds of the formulas 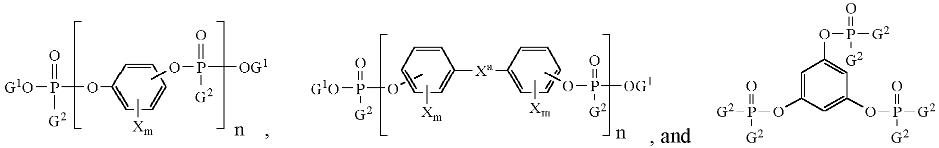 wherein each G¹ is independently a C₁₋₃₀ hydrocarbyl; each G² is independently a C₁₋₃₀ hydrocarbyl or hydrocarbyloxy; X^{a} is as defined in formula (3) or formula (4); each X is independently a bromine or chlorine; m is 0 to 4, and n is 1 to 30. In a specific aspect, X^{a} is a single bond, methylene, isopropylidene, or 3,3,5-trimethylcyclohexylidene.

Specific organophosphorous compounds are inclusive of acid esters of formula (8) 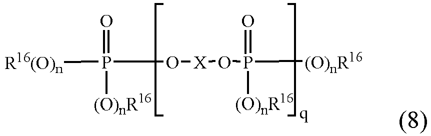 wherein each R¹⁶ is independently C₁₋₈ alkyl, C₅₋₆ cycloalkyl, C₆₋₂₀ aryl, or C₇₋₁₂ arylalkylene, each optionally substituted by C₁₋₁₂ alkyl, preferably by C₁₋₄ alkyl, and X is a mono- or poly-nuclear aromatic C₆₋₃₀ moiety or a linear or branched C₂₋₃₀ aliphatic radical, which can be OH-substituted and can contain up to 8 ether bonds, provided that at least one R¹⁶ or X is an aromatic group; each n is independently 0 or 1; and q is from 0.5 to 30. In some aspects each R¹⁶ is independently C₁₋₄ alkyl, naphthyl, phenyl(C₁₋₄)alkylene, aryl groups optionally substituted by C₁₋₄ alkyl; each X is a mono- or poly-nuclear aromatic C₆₋₃₀ moiety, each n is 1; and q is from 0.5 to 30. In some aspects each R¹⁶ is aromatic, e.g., phenyl; each X is a mono- or poly-nuclear aromatic C₆₋₃₀ moiety, including a moiety derived from formula (2); n is one; and q is from 0.8 to 15. In other aspects, each R¹⁶ is phenyl; X is cresyl, xylenyl, propylphenyl, or butylphenyl, one of the following divalent groups 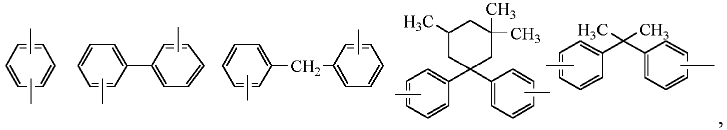 or a combination comprising one or more of the foregoing; n is 1; and q is from 1 to 5, or from 1 to 2. In some aspects at least one R¹⁶ or X corresponds to a monomer used to form the polycarbonate, e.g., bisphenol A, resorcinol, or the like. Organophosphorous compounds of this type include the bis(diphenyl) phosphate of hydroquinone, resorcinol bis(diphenyl phosphate) (RDP), and bisphenol A bis(diphenyl) phosphate (BPADP), and their oligomeric and polymeric counterparts.

The organophosphorous compounds can contain phosphorous-nitrogen bonds. Phosphazenes (9) and cyclic phosphazenes (10) 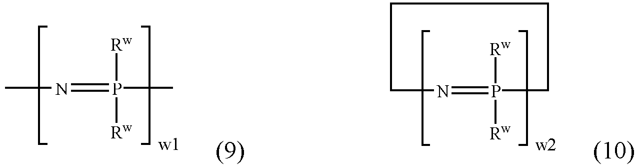 in particular can be used, wherein w1 is 3-10,000 and w2 is 3-25, preferably 3-7, and each R^{w} is independently a C₁₋₁₂ alkyl, alkenyl, alkoxy, aryl, aryloxy, or polyoxyalkylene group. In the foregoing groups at least one hydrogen atom of these groups can be substituted with a group having an N, S, O, or F atom, or an amino group. For example, each R^{w} can be a substituted or unsubstituted phenoxy, an amino, or a polyoxyalkylene group. Any given R^{w} can further be a crosslink to another phosphazene group. Exemplary crosslinks include bisphenol groups, for example bisphenol A groups. Examples include phenoxy cyclotriphosphazene, octaphenoxy cyclotetraphosphazene decaphenoxy cyclopentaphosphazene, and the like. A combination of different phosphazenes can be used. A number of phosphazenes and their synthesis are described in H. R. Allcook, "Phosphorous-Nitrogen Compounds" Academic Press (1972), and J. E. Mark et al., "Inorganic Polymers" Prentice-Hall International, Inc. (1992).

The organophosphorous compound is present in an amount effective to provide 0.5-0.9 wt% based on the total weight of the composition. As used herein, "added phosphorous" means phosphorous from the organophosphorous compound, and excludes any phosphorous present in an additive (e.g., tetrakis(2,4-di-tert-butylphenyl)-4,4-biphenyldiphosphonite (PEPQ) and any phosphorous present as a contaminant in the components used in the manufacture of the poly(ester-carbonate)s, i.e., the aromatic dihydroxy monomer, the aromatic dicarboxylic acid monomer, endcapping agents, and the carbonate source, for example.

The performance of the flame retardant compositions is dependent on the temperature window at which the organophosphorous compound is active, and the structure of the organophosphorous compound influences this temperature window. Matching the temperature window of organophosphorous activity to enhance the composition flame retardancy is preferred. In compositions comprising poly(ester-carbonate)s, the organophosphorous has a mass loss rate maximum below 420 °C as determined by thermogravimetric analysis (TGA) using an air atmosphere and a rate of temperature change of 20 °C. per minute. This improves the effectiveness of the organophosphorous compound and hence in compositions comprising the preferred organophosphorous compounds, the loading of organophosphorous compound can be lower.

The flame retardant compositions can include various additives ordinarily incorporated into polymer compositions of this type, with the proviso that the additive(s) are selected so as to not significantly adversely affect the desired properties of the thermoplastic composition, in particular viscosity and impact resistance. Such additives can be mixed at a suitable time during the mixing of the components for forming the composition. Additives include impact modifiers, fillers, reinforcing agents, antioxidants, heat stabilizers, light stabilizers, ultraviolet (UV) light stabilizers, plasticizers, lubricants, mold release agents, antistatic agents, colorants such as such as titanium dioxide, carbon black, and organic dyes, surface effect additives, radiation stabilizers, flame retardants, and anti-drip agents. A combination of additives can be used, for example a combination of an antioxidant, a heat stabilizer, mold release agent, and ultraviolet light stabilizer. In general, the additives are used in the amounts generally known to be effective. For example, the total amount of the additives (other than any impact modifier, filler, or reinforcing agents) can be 0.01-5 wt%, based on the total weight of the flame retardant composition.

Antioxidant additives include organophosphites such as tris(nonyl phenyl)phosphite, tris(2,4-di-t-butylphenyl)phosphite, bis(2,4-di-t-butylphenyl)pentaerythritol diphosphite, distearyl pentaerythritol diphosphite or the like; alkylated monophenols or polyphenols; alkylated reaction products of polyphenols with dienes, such as tetrakis[methylene(3,5-di-tert-butyl-4-hydroxyhydrocinnamate)] methane, or the like; butylated reaction products of para-cresol or dicyclopentadiene; alkylated hydroquinones; hydroxylated thiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilaurylthiopropionate, ditridecylthiodipropionate, octadecyl-3-(3,5-di-tert-butyl-4-hydroxyphenyl)propionate, pentaerythrityl-tetrakis[3-(3,5-di-tert-butyl-4-hydroxyphenyl)propionate or the like; amides of beta-(3,5-di-tert-butyl-4-hydroxyphenyl)-propionic acid or the like, or combinations comprising at least one of the foregoing antioxidants. Antioxidants are generally used in amounts of 0.01-0.1 wt %, preferably 0.05-0.1 wt%, based on 100 parts by weight of the flame retardant composition.

The flame retardant compositions can be manufactured by various methods known in the art. For example, powdered poly(ester-carbonate), and other optional components are first blended, optionally with any fillers, in a high speed mixer or by hand mixing. The blend is then fed into the throat of a twin-screw extruder via a hopper. Alternatively, at least one of the components can be incorporated into the composition by feeding it directly into the extruder at the throat or downstream through a sidestuffer, or by being compounded into a masterbatch with a desired polymer and fed into the extruder. The extruder is generally operated at a temperature higher than that necessary to cause the composition to flow. The extrudate can be immediately quenched in a water bath and pelletized. The pellets so prepared can be one-fourth inch long or less as desired. Such pellets can be used for subsequent molding, shaping, or forming.

Shaped, formed, or molded articles comprising the flame retardant compositions are also provided. The flame retardant compositions can be molded into useful shaped articles by a variety of methods, such as injection molding, extrusion, rotational molding, blow molding and thermoforming. Some examples of articles include computer and business machine housings such as housings for monitors, handheld electronic device housings such as housings for cell phones, electrical connectors, and components of lighting fixtures, ornaments, home appliances, roofs, greenhouses, sun rooms, swimming pool enclosures, and the like. **In** addition, the flame retardant compositions can be used for optical applications and electrical applications. **In an** aspect, the article is an electrical component, preferably a circuit breaker.

Exemplary articles include a lens, a light guide, a waveguide, a collimator, an optical fiber, a window, a door, a visor, a display screen, an electronic device, a scientific or medical device, an autoclavable article, a safety shield, a fire shield, wire or cable sheathing, a mold, a dish, a tray, a screen, an enclosure, glazing, packaging, a gas barrier, an anti-fog layer, or an anti-reflective layer.

The compositions can be used in component of a device comprising a lens, a device comprising a light guide, a device comprising a waveguide, a device comprising a collimator, a device comprising an optical fiber, a device comprising a lighting element, a device comprising a window, a device comprising a door, or the article is a structural component of a vehicle, a building, or an appliance, or the article is a component of a medical device, a component of a display screen, a component of an electronic device, a component of a safety device, a component of a screen, a component of conveyor, a component of a mold, a component of a dish, a component of an enclosure, a component of packaging, a component of a gas barrier, a component of an encapsulant, a component of a label, a component of a gas.

Advantageously, the flame retardant compositions have a UL 94 rating of V0 at a thickness of 0.6 millimeter. It is a further advantage that the flame retardant compositions can have a UL 94 rating of V0 at a thickness of 0.6 millimeter after aging.

This disclosure is further illustrated by the following examples, which are nonlimiting.

### EXAMPLES

The materials shown in Table 1 were used.

**Table 1.**

| Component | Description (Trade name) | Source |
|---|---|---|
| ITR-PC | Amorphous poly-(82 wt % isophthalate-terephthalate- resorcinol ester)-co-(18 wt % bisphenol A carbonate) copolymer (Mw = 40,000 g/mol, using polystyrene standards); the ratio of isophthalate units to terephthalate units is 50:50. | SABIC |
| PPC | Amorphous poly-(ester-carbonate), bisphenol A based poly(phthalate-carbonate) containing 74 wt% isophthalate-terephthalate ester units (Mw = 28,500 g/mol, using polystyrene standards); the ratio of isophthalate units to terephthalate units is 93:7. | SABIC |
| FR | Solid phosphonate ester, having the tradename Fyrolflex Sol-DP, 10.7 percent phosphorous by weight. | ICL-IP |
| PEPQ | Tetrakis(2,4-di-tert-butylphenyl)-4,4-biphenyldiphosphonite, CAS 119345-01-6 | Clariant |

The samples were prepared as described below and the following test methods were used.

All powder additives were combined together with the polycarbonate powder(s), using a paint shaker, and fed through one feeder to an extruder. Extrusion for all combinations was performed on a 25 mm twin screw extruder, using a melt temperature of 270-320 °C and 300 revolutions per minute (rpm), then pelleted. The pellets were dried for 3 hours at 100 °C. Dried pellets were injection molded at temperatures of 270-300 °C to form specimens for most of the tests below.

Heat distortion temperatures (HDT) were measured in accordance with the ISO-75 standard with a 5.5 J hammer, using the flat side of 4 mm ISO bars and a load of 1.8 MPa (A/f).

Melt volume rates (MVR) were measured in accordance with the ISO-1133 standard at 250 °C under a load of 5 kg with residence time of 5 minutes. The granules were dried for 3 hours at 120 °C.

Vicat softening temperatures were measured on 4 mm ISO bars in accordance with the ISO-306 standard at a load of 50 N and a speed of 120 °C/h (B120).

The visible transmission measurements were acquired on 1 mm thick parts on a HAZE-GUARD plus from BYK-Gardner instruments. Flammability tests were performed at 1.0 mm, 0.8 mm, and 0.6 mm, in accordance with the UL94 standard (see Table 2). V-rating: V-ratings obtained for every set of 5 bars. The flame bars were conditioned prior to testing at 23 °C for 48 hours or 70 °C for 168 hours, each at 50% relative humidity. In some cases, a second set of 5 bars was tested to give an indication of the robustness of the rating.

**Table 2.**

| | t₁ and/or t₂ | 5-bar FOT* | burning drips |
|---|---|---|---|
| V0 | <10 | <50 | no |
| V1 | <30 | <250 | no |
| V2 | <30 | <250 | yes |
| N.R. (no rating) | >30 | >250 | |

| | | | |
|---|---|---|---|
| *FOT: total flame-out-time for all 5 bars (FOT = t1 + t2) | | | |

### Examples 1-4

The formulations and properties of Examples 1-4 (E1-E3 and CE4) having 0.7 wt% phosphorous are shown in Table 3.

**Table 3.**

| Component | Unit | 1 | 2 | 3 | 4* | |
|---|---|---|---|---|---|---|
| PC-ITR | Wt% | | 46.44 | 62.44 | 93.44 | |
| PPC | Wt% | 93.44 | 47 | 31 | | |
| PEPQ | Wt% | 0.06 | 0.06 | 0.06 | 0.06 | |
| FR | Wt% | 6.5 | 6.5 | 6.5 | 6.5 | |
| Total | Wt% | 100 | 100 | 100 | 100 | |
| Phosphorous | Wt% | 0.7 | 0.7 | 0.7 | 0.7 | |

| Properties | | | | | | |
|---|---|---|---|---|---|---|
| MVR, 300 s | cm³/10 min | 6 | 18 | 32 | 24 | |
| HDT, 1.8 MPa, flat | | °C | 125 | 115 | 106 | 101 |
| Vicat B120 | | °C | 142 | 133 | 120 | 115 |
| Transmission | | | 89 | 71 | 72 | 90 |
| UL94 at 1.0 mm | | | V0 | V0 | V0 | V0 |
| 23 °C, 48 h | ∑t1 | s | 5 | 5 | 5 | 7 |
| | ∑t1 | s | 5 | 5 | 5 | 7 |
| | ∑(t1 + t2) | s | 10 | 10 | 9 | 14 |
| UL94 at 1.0 mm | | | V0 | V0 | V0 | V0 |
| 70 °C, 168 h | ∑t1 | s | 3 | 3 | 3 | 6 |
| | ∑t1 | s | 5 | 4 | 4 | 5 |
| | ∑(t1 + t2) | s | 8 | 8 | 8 | 12 |
| UL94 at 0.8 mm | | | V0 | V0 | V0 | V2 |
| Flaming drips | | | 0 | 0 | 0 | 2 |
| 23 °C, 48 h | ∑t1 | s | 5 | 5 | 5 | 8 |
| | ∑t1 | s | 5 | 6 | 5 | 7 |
| | ∑(t1 + t2) | s | 9 | 10 | 9 | 15 |
| UL94 at 0.8 mm | | | V0 | V0 | V0 | V0 |
| 70 °C, 168 h | ∑t1 | s | 5 | 4 | 7 | 9 |
| | ∑t1 | s | 5 | 5 | 5 | 10 |
| | ∑(t1 + t2) | s | 10 | 10 | 12 | 18 |
| UL94 at 0.6 mm | | | V0 | V0 | V0 | V2 |
| Flaming drips | | | 0 | 0 | 0 | 1 |
| 23 °C, 48 h | ∑t1 | s | 5 | 5 | 5 | 7 |
| | ∑t1 | s | 5 | 6 | 6 | 7 |
| | ∑(t1 + t2) | s | 10 | 10 | 10 | 14 |
| UL94 at 0.6 mm | | | V0 | V0 | V0 | V2 |
| Flaming drips | | | 0 | 0 | 0 | 2 |
| 70 °C, 168 h | ∑t1 | s | 4 | 4 | 4 | 9 |
| | ∑t1 | s | 4 | 5 | 5 | 7 |
| | ∑(t1 + t2) | s | 8 | 9 | 9 | 16 |

| | | | | | | |
|---|---|---|---|---|---|---|
| *Comparative Examples | | | | | | |

Examples 1-3 shows that polycarbonate copolymer compositions including PPC and mixtures of PC-ITR and PPC provide a UL-94 performance of V0 at 0.6 mm under both standard and abusive conditions. Comparative Example 4 shows that omission of PPC resulted in a loss of UL-94 performance of V0 at 0.6 mm. In addition, both the HDT and Vicat softening temperatures were adversely affected.

Preferred organophosphorous compounds have a low temperature weight loss of about 50% below 400 °C (FIG. 1) or a derivative peak weight loss below 410 °C (FIG. 2). These compositions give the desired UL-94 performance at lower loading, which benefits physical properties such as heat resistance and impact.

The compositions, methods, and articles can alternatively comprise, consist of, or consist essentially of, any appropriate materials, steps, or components herein disclosed. The compositions, methods, and articles can additionally, or alternatively, be formulated so as to be devoid, or substantially free, of any materials (or species), steps, or components, that are otherwise not necessary to the achievement of the function or objectives of the compositions, methods, and articles.

All ranges disclosed herein are inclusive of the endpoints, and the endpoints are independently combinable with each other (e.g., ranges of "up to 25 wt%, or, more preferably, 5 wt%-20 wt%", is inclusive of the endpoints and all intermediate values of the ranges of "5 wt%-25 wt%," etc.). "Combinations" is inclusive of blends, mixtures, alloys, reaction products, and the like. The terms "first," "second," and the like, do not denote any order, quantity, or importance, but rather are used to distinguish one element from another. The terms "a" and "an" and "the" do not denote a limitation of quantity and are to be construed to cover both the singular and the plural, unless otherwise indicated herein or clearly contradicted by context. "Or" means "and/or" unless clearly stated otherwise. Reference throughout the specification to "some aspects," "an aspect," and so forth, means that a particular element described in connection with the aspect is included in at least one aspect described herein, and may or may not be present in other aspects. In addition, it is to be understood that the described elements may be combined in any suitable manner in the various aspects. A "combination thereof" is open and includes any combination comprising at least one of the listed components or properties optionally together with a like or equivalent component or property not listed

Unless specified to the contrary herein, all test standards are the most recent standard in effect as of the filing date of this application, or, if priority is claimed, the filing date of the earliest priority application in which the test standard appears.

Unless defined otherwise, technical and scientific terms used herein have the same meaning as is commonly understood by one of skill in the art to which this application belongs.

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group.

The term "hydrocarbyl" means a group that contains only carbon and hydrogen unless it is specifically identified as "substituted hydrocarbyl," in which case it can contain heteroatoms in addition to carbon and hydrogen. The hydrocarbyl residue can be aliphatic, aromatic, straight-chain, cyclic, bicyclic, branched, saturated, unsaturated, or a combination these moieties. The term "alkyl" means a branched or straight chain, unsaturated aliphatic hydrocarbon group, e.g., methyl, ethyl, n-propyl, i-propyl, n-butyl, s-butyl, t-butyl, n-pentyl, s-pentyl, and n- and s-hexyl. "Alkenyl" means a straight or branched chain, monovalent hydrocarbon group having at least one carbon-carbon double bond (e.g., ethenyl (-HC=CH₂)). "Alkoxy" means an alkyl group that is linked via an oxygen (i.e., alkyl-O-), for example methoxy, ethoxy, and sec-butyloxy groups. "Alkylene" means a straight or branched chain, saturated, divalent aliphatic hydrocarbon group (e.g., methylene (-CH₂-) or, propylene (-(CH₂)₃-)). "Cycloalkylene" means a divalent cyclic alkylene group, -CₙH₂ₙ₋ₓ, wherein x is the number of hydrogens replaced by cyclization(s). "Cycloalkenyl" means a monovalent group having one or more rings and one or more carbon-carbon double bonds in the ring, wherein all ring members are carbon (e.g., cyclopentyl and cyclohexyl). "Aryl" means an aromatic hydrocarbon group containing the specified number of carbon atoms, such as phenyl, tropone, indanyl, or naphthyl. "Arylene" means a divalent aryl group. "Alkylarylene" means an arylene group substituted with an alkyl group. "Arylalkylene" means an alkylene group substituted with an aryl group (e.g., benzyl). The prefix "halo" means a group or compound including one more of a fluoro, chloro, bromo, or iodo substituent. A combination of different halo groups (e.g., bromo and fluoro), or only chloro groups can be present. The prefix "hetero" means that the compound or group includes at least one ring member that is a heteroatom (e.g., 1, 2, or 3 heteroatom(s)), wherein the heteroatom(s) is each independently N, O, S, Si, or P. "Substituted" means that the compound or group is substituted with at least one (e.g., 1, 2, 3, or 4) substituents that can each independently be a C₁₋₉ alkoxy, a C₁₋₉ haloalkoxy, a nitro (-NO₂), a cyano (-CN), a C₁₋₆ alkyl sulfonyl (-S(=O)₂-alkyl), a C₆₋₁₂ aryl sulfonyl (-S(=O)₂-aryl)a thiol (-SH), a thiocyano (-SCN), a tosyl (CH₃C₆H₄SO₂-), a C₃₋₁₂ cycloalkyl, a C₂₋₁₂ alkenyl, a C₅₋₁₂ cycloalkenyl, a C₆₋₁₂ aryl, a C₇₋₁₃ arylalkylene, a C₄₋₁₂ heterocycloalkyl, and a C₃₋₁₂ heteroaryl instead of hydrogen, provided that the substituted atom's normal valence is not exceeded. The number of carbon atoms indicated in a group is exclusive of any substituents. For example -CH₂CH₂CN is a C₂ alkyl group substituted with a nitrile.

## Claims

1. A flame retardant composition comprising:
a poly(carbonate-bisphenol phthalate ester) comprising 1-50 wt% of aromatic carbonate units and 50-99 wt% of bisphenol phthalate ester units, each based on the sum of the moles of the carbonate units and the bisphenol phthalate ester units;
an organophosphorous compound wherein the organophosphorous compound is present in an amount effective to provide 0.5-0.9 wt% of added phosphorous, based on the total weight of the composition and wherein the organophosphorous compound has a mass loss maximum below 420 °C as determined by thermogravimetric analysis using an air atmosphere and a rate of temperature change of 20 °C per minute; and
a poly(carbonate-monoarylate phthalate ester) comprising 2-90 mole % of aromatic carbonate units and 10-98 mole % of monoarylate phthalate ester units, each based on the sum of the moles of the carbonate units and the monoarylate phthalate ester units,
wherein the composition has a bromine or chlorine content of less than or equal to 100 parts per million by weight, less than or equal to 75 parts per million by weight, or less than or equal to 50 parts per million by weight, based on the total parts by weight of the composition; and
wherein a molded sample of the flame retardant composition has
a UL 94 rating of V0 at a thickness of 0.6 millimeter, and
a transmission of at least 70% according to ASTM D 1003 at a thickness of 1.0 millimeter.

2. The flame retardant composition of claim 1, comprising
25-60 wt% of the poly(carbonate-bisphenol phthalate ester); and
40-75 wt% a poly(carbonate-monoarylate phthalate ester).

3. The flame retardant composition of any one of the preceding claims wherein the carbonate units comprise bisphenol A carbonate units.

4. The flame retardant composition of any one of the preceding claims wherein the poly(carbonate-bisphenol phthalate ester) has the formula 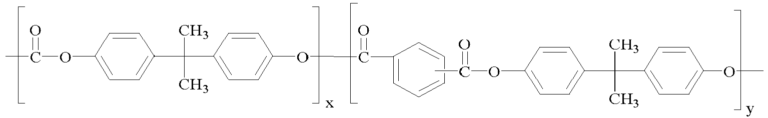 wherein
the weight ratio of carbonate units x to ester units y is or 10:90-45:55, and
the ester units have a molar ratio of isophthalate to terephthalate from 98:2-88:12.

5. The flame retardant composition of any one of the preceding claims, wherein the organophosphorous compound is a monomeric, oligomeric, or polymeric aromatic phosphate, phosphite, phosphonate, phosphinate, phosphine oxide, phosphine, or a combination thereof.

6. The flame retardant composition of any one of the preceding claims wherein the organophosphorous compound has the formula 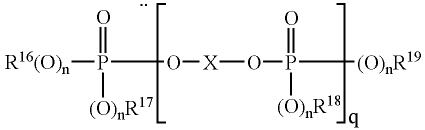 wherein
R¹⁶, R¹⁷, R¹⁸ and R¹⁹ are each independently C₁₋₈ alkyl, C₅₋₆ cycloalkyl, C₆₋₂₀ aryl, or C₇₋₁₂ arylalkylene, each optionally substituted by C₁₋₁₂ alkyl, and
X is a mono- or poly-nuclear aromatic C₆₋₃₀ moiety or a linear or branched C₂₋₃₀ aliphatic radical, each optionally hydroxy-substituted and optionally up to 8 ether bonds,
provided that at least one of R¹⁶, R¹⁷, R¹⁸, R¹⁹, and X is aromatic,
n is each independently 0 or 1, and
q is from 0.5-30, and
preferably wherein
each of R¹⁶, R¹⁷, R¹⁸, and R¹⁹ is phenyl,
X is of the formula 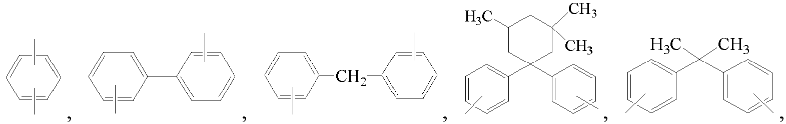 or a combination thereof,
each n is 1, and
q is 1-5.

7. The flame retardant composition of any one of the preceding claims, wherein the poly(carbonate-monoarylate phthalate ester) is present, and is of the formula 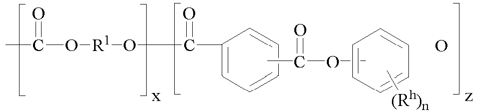 wherein
R¹ is C₆₋₃₀ aromatic group,
each R^{h} is independently a halogen atom, a C₁₋₁₀ hydrocarbyl group, a halogen-substituted C₁₋₁₀ alkyl group, a C₆₋₁₀ aryl group, or a halogen-substituted C₆₋₁₀ aryl group,
n is 0-4, and
a mole ratio of carbonate units x to ester units z is from 98:2-2:98.

8. The flame retardant composition of any one of the preceding claims, wherein the aromatic carbonate units of the poly(carbonate-monoarylate phthalate ester) are bisphenol A carbonate units.

9. The flame retardant composition of any one of the preceding claims, wherein the poly(carbonate-monoarylate phthalate ester) comprises:
10-70 mole %, preferably 10-50 mole %, more preferably 10-30 mole % of the aromatic carbonate units; and
30-90 mole %, preferably 50-90 mole %, more preferably 70-90 mole % of the monoarylate phthalate ester units.

10. The flame retardant composition of any one of the preceding claims, wherein a molded sample of the flame retardant composition has a UL 94 rating of V0 at a thickness of 0.6 millimeter after aging at 23 °C for 48 hours at 50% relative humidity.

11. The flame retardant composition of any one of the preceding claims having a bromine, chlorine content, or a combined bromine and chlorine content of less than or equal to 100 parts per million by weight, less than or equal to 75 parts per million by weight, or less than or equal to 50 parts per million by weight, based on the total parts by weight of the composition.

12. The flame retardant composition of any one of claims 1 to 10 having a bromine, chlorine, or fluorine content, or a combined bromine, chlorine, and fluorine content of less than or equal to 100 parts per million by weight, less than or equal to 75 parts per million by weight, or less than or equal to 50 parts per million by weight, based on the total parts by weight of the composition.

13. An article comprising the flame retardant composition of any one of the preceding claims.

14. The article of claim 13 comprising an electrical component, preferably a circuit breaker.

15. A method for forming the article according to claim 13 or claim 14, comprising molding, casting, or extruding the article.

## Patentansprüche

1. Flammhemmende Zusammensetzung, umfassend:
einen Poly(carbonat-bisphenolphthalatester), umfassend 1-50 Gew.-% aromatische Carbonateinheiten und 50-99 Gew.-% Bisphenolphthalatestereinheiten, jeweils bezogen auf die Summe der Mole der Carbonateinheiten und der Bisphenolphthalatestereinheiten;
eine Organophosphorverbindung, wobei die Organophosphorverbindung in einer Menge vorliegt, die wirksam ist, um 0,5-0,9 Gew.-% zugesetzten Phosphor bereitzustellen, bezogen auf das Gesamtgewicht der Zusammensetzung, und wobei die Organophosphorverbindung ein Massenverlustmaximum unter 420 °C aufweist, wie durch thermogravimetrische Analyse unter Verwendung einer Luftatmosphäre und einer Temperaturänderungsrate von 20 °C pro Minute bestimmt; und
einen Poly(carbonat-monoarylatphthalatester), umfassend 2-90 Mol-% aromatische Carbonateinheiten und 10-98 Mol-% Monoarylatphthalatestereinheiten, jeweils bezogen auf die Summe der Mole der Carbonateinheiten und der Monoarylatphthalatestereinheiten,
wobei die Zusammensetzung einen Brom- oder Chlorgehalt von weniger als oder gleich 100 Gewichtsteilen pro Million, weniger als oder gleich 75 Gewichtsteilen pro Million oder weniger als oder gleich 50 Gewichtsteilen pro Million aufweist, bezogen auf die gesamten Gewichtsteile der Zusammensetzung; und
wobei eine geformte Probe der flammhemmenden Zusammensetzung Folgendes aufweist:
eine UL 94-Einstufung von V0 bei einer Dicke von 0,6 Millimeter und
eine Transmission von mindestens 70 % gemäß ASTM D 1003 bei einer Dicke von 1,0 Millimeter.

2. Flammhemmende Zusammensetzung nach Anspruch 1, umfassend
25-60 Gew.-% des Poly(carbonat-bisphenolphthalatesters) und
40-75 Gew.-% eines Poly(carbonat-monoarylatphthalatesters).

3. Flammhemmende Zusammensetzung nach einem der vorhergehenden Ansprüche, wobei die Carbonateinheiten Bisphenol-A-Carbonateinheiten umfassen.

4. Flammhemmende Zusammensetzung nach einem der vorhergehenden Ansprüche, wobei der Poly(carbonat-bisphenolphthalatester) die folgende Formel aufweist 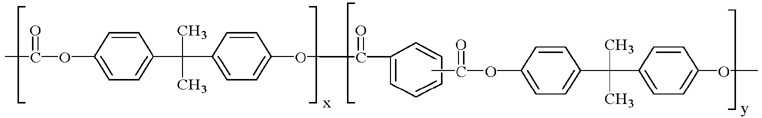 wobei
das Gewichtsverhältnis von Carbonateinheiten x zu Estereinheiten y 10:90-45:55 beträgt und
die Estereinheiten ein Molverhältnis von Isophthalat zu Terephthalat von 98:2-88:12 aufweisen.

5. Flammhemmende Zusammensetzung nach einem der vorhergehenden Ansprüche, wobei die Organophosphorverbindung ein monomeres, oligomeres oder polymeres aromatisches Phosphat, Phosphit, Phosphonat, Phosphinat, Phosphinoxid, Phosphin oder eine Kombination davon ist.

6. Flammhemmende Zusammensetzung nach einem der vorhergehenden Ansprüche, wobei die Organophosphorverbindung die folgende Formel aufweist 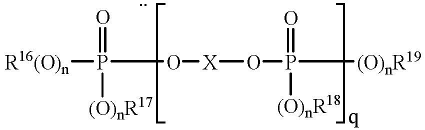 wobei
R¹⁶, R¹⁷, R¹⁸ und R¹⁹ jeweils unabhängig C₁₋₈ -Alkyl, C₅₋₆ -Cycloalkyl, C₆₋₂₀ -Aryl oder C₇₋₁₂ -Arylalkylen, jeweils gegebenenfalls substituiert mit C₁₋₁₂ -Alkyl, sind und
X eine ein- oder mehrkernige aromatische C₆₋₃₀ -Einheit oder ein linearer oder verzweigter aliphatischer C₂₋₃₀ -Rest, jeweils gegebenenfalls hydroxysubstituiert und gegebenenfalls bis zu 8 Etherbindungen, ist,
mit der Maßgabe, dass mindestens eines von R¹⁶, R¹⁷, R¹⁸, R¹⁹ und X aromatisch ist,
n jeweils unabhängig 0 oder 1 ist und
q 0,5-30 ist und
vorzugsweise wobei
jedes von R¹⁶, R¹⁷, R¹⁸ und R¹⁹ Phenyl ist,
X die folgende Formel aufweist 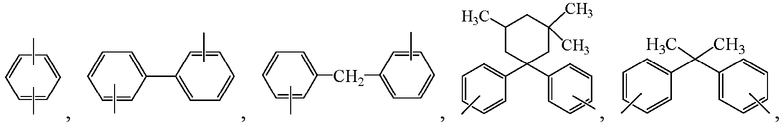 oder eine Kombination davon,
jedes n 1 ist und
q 1-5 ist.

7. Flammhemmende Zusammensetzung nach einem der vorhergehenden Ansprüche, wobei der Poly(carbonat-monoarylatphthalatester) vorhanden ist und die folgende Formel aufweist 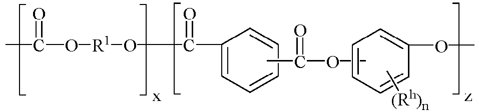 wobei
R¹ eine aromatische C₆₋₃₀ -Gruppe ist,
jedes R^{h} unabhängig ein Halogenatom, eine C₁₋₁₀ -Hydrocarbylgruppe, eine halogensubstituierte C₁₋₁₀ -Alkylgruppe, eine C₆₋₁₀ -Arylgruppe oder eine halogensubstituierte C₆₋₁₀ -Arylgruppe ist,
n 0-4 ist und
ein Molverhältnis von Carbonateinheiten x zu Estereinheiten z 98:2-2:98 beträgt.

8. Flammhemmende Zusammensetzung nach einem der vorhergehenden Ansprüche, wobei die aromatischen Carbonateinheiten des Poly(carbonat-monoarylatphthalatesters) Bisphenol-A-Carbonateinheiten sind.

9. Flammhemmende Zusammensetzung nach einem der vorhergehenden Ansprüche, wobei der Poly(carbonat-monoarylatphthalatester) umfasst:
10-70 Mol-%, vorzugsweise 10-50 Mol-%, stärker bevorzugt 10-30 Mol-% der aromatischen Carbonateinheiten; und
30-90 Mol-%, vorzugsweise 50-90 Mol-%, stärker bevorzugt 70-90 Mol-% der Monoarylatphthalatestereinheiten.

10. Flammhemmende Zusammensetzung nach einem der vorhergehenden Ansprüche, wobei eine geformte Probe der flammhemmenden Zusammensetzung eine UL 94-Einstufung von V0 bei einer Dicke von 0,6 Millimeter nach Alterung bei 23 °C für 48 Stunden bei 50 % relativer Luftfeuchtigkeit aufweist.

11. Flammhemmende Zusammensetzung nach einem der vorhergehenden Ansprüche mit einem Brom-, Chlorgehalt oder einem Gesamtgehalt an Brom- und Chlor von weniger als oder gleich 100 Gewichtsteilen pro Million, weniger als oder gleich 75 Gewichtsteilen pro Million oder weniger als oder gleich 50 Gewichtsteilen pro Million, bezogen auf die gesamten Gewichtsteile der Zusammensetzung.

12. Flammhemmende Zusammensetzung nach einem der Ansprüche 1 bis 10 mit einem Brom-, Chlor- oder Fluorgehalt oder einem Gesamtgehalt an Brom-, Chlor- und Fluor von weniger als oder gleich 100 Gewichtsteilen pro Million, weniger als oder gleich 75 Gewichtsteilen pro Million oder weniger als oder gleich 50 Gewichtsteilen pro Million, bezogen auf die gesamten Gewichtsteile der Zusammensetzung.

13. Gegenstand, umfassend die flammhemmende Zusammensetzung nach einem der vorhergehenden Ansprüche.

14. Gegenstand nach Anspruch 13, umfassend eine elektrische Komponente, vorzugsweise einen Leistungsschalter.

15. Verfahren zum Erstellen des Gegenstands nach Anspruch 13 oder Anspruch 14, umfassend das Formen, Gießen oder Extrudieren des Gegenstands.

## Revendications

1. Composition ignifuge comprenant :
un poly(carbonate-ester de phtalate de bisphénol) comprenant 1 à 50 % en poids de motifs carbonates aromatiques et 50 à 99 % en poids de motifs esters de phtalate de bisphénol, chacun par rapport à la somme des moles des motifs carbonates et des motifs esters de phtalate de bisphénol;
un composé organophosphoré dans lequel le composé organophosphoré est présent en une quantité efficace pour fournir 0,5 à 0,9 % en poids de phosphore ajouté, par rapport au poids total de la composition et dans lequel le composé organophosphoré a une perte de masse maximale en dessous de 420°C, telle que déterminée par analyse thermogravimétrique en utilisant une atmosphère d'air et un taux de variation de température de 20°C par minute ; et
un poly(carbonate-ester de phtalate de monoarylate ) comprenant 2 à 90 % en moles de motifs carbonates aromatiques et 10 à 98 % en moles de motifs esters de phtalate de monoarylate, chacun par rapport à la somme des moles des motifs carbonates et des motifs esters de phtalate de monoarylate,
dans laquelle la composition a une teneur en brome ou en chlore inférieure ou égale à 100 parties par million en poids, inférieure ou égale à 75 parties par million en poids, ou inférieure ou égale à 50 parties par million en poids, par rapport aux parties totales en poids de la composition ; et
dans laquelle un échantillon moulé de la composition ignifuge a
un score UL 94 de V0 à une épaisseur de 0,6 millimètre, et
une transmission d'au moins 70 % selon la norme ASTM D 1003 à une épaisseur de 1,0 millimètre.

2. Composition ignifuge selon la revendication 1, comprenant
25 à 60 % en poids de poly(carbonate-ester de phtalate de bisphénol); et
40 à 75 % en poids d'un poly(carbonate-ester de phtalate de monoarylate).

3. Composition ignifuge selon l'une quelconque des revendications précédentes, dans laquelle les motifs carbonates comprennent des motifs carbonates de bisphénol A.

4. Composition ignifuge selon l'une quelconque des revendications précédentes, dans laquelle le poly(carbonate-ester de phtalate de bisphénol ) a la formule 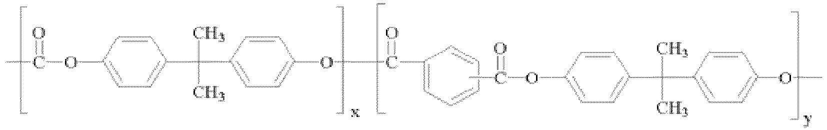 dans laquelle
le rapport en poids des motifs carbonates x aux motifs esters y est de 10 : 90 à 45 : 55, et
les motifs esters ont un rapport molaire de l'isophtalate au téréphtalate de 98 : 2 à 88 : 12.

5. Composition ignifuge selon l'une quelconque des revendications précédentes, dans laquelle le composé organophosphoré est un phosphite, phosphonate, phosphinate, oxyde phosphinique, phosphine ou phosphate aromatique monomérique, oligomérique ou polymérique, ou combinaison de ceux-ci.

6. Composition ignifuge selon l'une quelconque des revendications précédentes, dans laquelle le composé organophosphoré a la formule 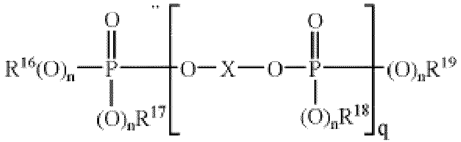 dans laquelle
R¹⁶, R¹⁷, R¹⁸ et R¹⁹ sont chacun indépendamment un alkyle en C₁₋₈, cycloalkyle en C₅₋₆, aryle en C₆₋₂₀ ou arylalkylène en C₇₋₁₂, chacun éventuellement substitué par un alkyle en C₁₋₁₂, et
X est une fraction aromatique en C₆₋₃₀ mono- ou polynucléaire ou un radical aliphatique en C₂₋₃₀ linéaire ou ramifié, chacun éventuellement substitué par un hydroxy et éventuellement jusqu'à 8 liaisons éther,
à condition qu'au moins un parmi R¹⁶, R¹⁷, R¹⁸, R¹⁹ et X soit aromatique,
n représente chacun indépendamment 0 ou 1, et
q vaut de 0,5 à 30, et
de préférence dans laquelle
chacun parmi R¹⁶, R¹⁷, R¹⁸ et R¹⁹ est un phényle,
X est de formule 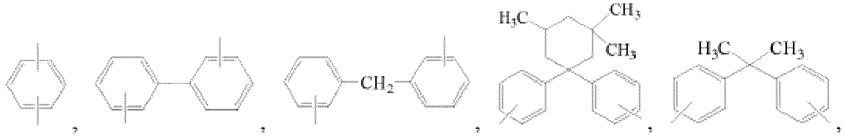
ou une combinaison de celles-ci,
chaque n vaut 1, et
q vaut de 1 à 5.

7. Composition ignifuge selon l'une quelconque des revendications précédentes, dans laquelle le poly(carbonate-ester de phtalate de monoarylate) est présent et est de formule 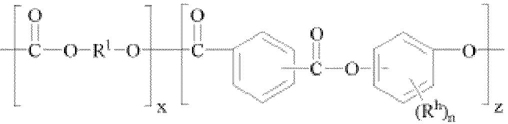 dans laquelle
R¹ est un groupe aromatique en C₆₋₃₀,
chaque R^{h} est indépendamment un atome d'halogène, un groupe hydrocarbyle en C₁₋₁₀, un groupe alkyle en C₁₋₁₀ substitué par un halogène, un groupe aryle en C₆₋₁₀, ou un groupe aryle en C₆₋₁₀ substitué par un halogène,
n vaut 0 à 4, et
le rapport molaire des motifs carbonates x aux motifs esters z va de 98 : 2 à 2 : 98.

8. Composition ignifuge selon l'une quelconque des revendications précédentes, dans laquelle les motifs carbonates aromatiques du poly(carbonate-ester de phtalate de monoarylate) sont des motifs carbonates de bisphénol A.

9. Composition ignifuge selon l'une quelconque des revendications précédentes, dans laquelle le poly(carbonate-ester de phtalate de monoarylate) comprend :
10 à 70 % en moles, de préférence 10 à 50 % en moles, plus préférentiellement de 10 à 30 % en moles de motifs carbonates aromatiques ; et
30 à 90 % en moles, de préférence 50 à 90 % en moles, plus préférentiellement 70 à 90 % en moles de motifs esters de phtalate de monoarylate.

10. Composition ignifuge selon l'une quelconque des revendications précédentes, dans laquelle un échantillon moulé de la composition ignifuge a un score UL 94 de V0 à une épaisseur de 0,6 millimètre après vieillissement à 23°C pendant 48 heures à une humidité relative de 50 %.

11. Composition ignifuge selon l'une quelconque des revendications précédentes ayant une teneur en brome, chlore, ou une teneur combinée en brome et chlore inférieure ou égale à 100 parties par million en poids, inférieure ou égale à 75 parties par million en poids, ou inférieure ou égale à 50 parties par million en poids, par rapport aux parties totales en poids de la composition.

12. Composition ignifuge selon l'une quelconque des revendications 1 à 10 ayant une teneur en brome, chlore, ou fluor, ou une teneur combinée en brome, chlore et fluor inférieure ou égale à 100 parties par million en poids, inférieure ou égale à 75 parties par million en poids, ou inférieure ou égale à 50 parties par million en poids, par rapport aux parties totales en poids de la composition.

13. Article comprenant la composition ignifuge selon l'une quelconque des revendications précédentes.

14. Article selon la revendication 13 comprenant un composant électrique, de préférence un disjoncteur.

15. Méthode pour former l'article selon la revendication 13 ou la revendication 14, comprenant le moulage, la coulée ou l'extrusion de l'article.
